(19) Europäisches Patentamt
European Patent Office
Office européen des brevets

(11) Publication number: 0 497 404 A1

(12) EUROPEAN PATENT APPLICATION

(21) Application number: 92200157.3

(22) Date of filing: 21.01.92

(51) Int. Cl.5: C08G 18/42, C08G 65/32, C08G 18/76, B01F 17/42, C08G 18/10, C08G 18/08, C08G 18/48, C08G 18/28, C08G 18/12

(30) Priority: 25.01.91 NL 9100120
04.04.91 NL 9100581

(43) Date of publication of application:
05.08.92 Bulletin 92/32

(84) Designated Contracting States:
AT BE CH DE DK ES FR GB GR IT LI NL PT SE

(71) Applicant: DSM N.V.
Het Overloon 1
NL-6411 TE Heerlen(NL)

(72) Inventor: Dekker, Gerrit Hendrik
Elsbeek 23
NL-8033 BC Zwolle(NL)
Inventor: Hardeman, Gerard
van der Helllaan 17
NL-6824 HC Arnhem(NL)
Inventor: Kolk, Dirk Jan
Buitengasthuisstraat 60
NL-8041 AB Zwolle(NL)
Inventor: Westerhof, Henk
Verengingstraat 79
NL-8012 BB Zwolle(NL)

(74) Representative: den Hartog, Jeroen Hendrikus Joseph et al
Octrooibureau DSM Postbus 9
NL-6160 MA Geleen(NL)

(54) **Internal emulsifier system based on alkylene oxide units.**

(57) The invention relates to an internal emulsifier system and the use of this system in the preparation of polyurethane dispersions such as non-ionic aqueous polyurethane dispersions based on tetramethylxylylene diisocyanate.

The emulsifier system is obtainable by reaction, at a temperature between 100°C and 200°C during 1-3 hours, between an alkoxypolyethylene glycol and an anhydride in the first step and a reaction in a second step, at a temperature between 100°C and 200°C, between the reaction product obtained in the first step and an alkyleneoxide, an epoxy alcohol or a diglycidylether.

EP 0 497 404 A1

The present invention relates to an internal emulsifier system based on alkylene oxide units and the use of this system in non-ionic polyurethane dispersions. The invention also relates to aqueous non-ionic polyurethane dispersions based on tetramethylxylene diisocyanate.

Emulsifier systems of this type and the use thereof in the preparation of nonionic polyurethane dispersions are disclosed in "Advances in Urethane Science and Technology", by Rosthauser and Nachtkamp in the article "Waterborne Polyurethanes" (K.C. Frisch, Vol. 10, 1987, pp. 128-131). Nonionic polyurethane dispersions can be prepared by first reacting a polyol, a diisocyanate and an emulsifier system to form a precursor and then dispersing this precursor, after which chain lengthening takes place by means of water or diamine. The emulsifier system used is the reaction product of equimolar amounts of alkoxypolyethylene glycol, a diisocyanate, such as, for example, isophorone diisocyanate or toluene diisocyanate, and dihydroxyalkylamine.

A disadvantage of the said emulsifier system is that undesired compounds are also obtained during the preparation thereof because the diisocyanate, not only reacts with only one equivalent of alkoxypolyethylene glycol but also reacts with two equivalents of alkoxypolyethylene glycol. In view of the fact that in this case no further reactive NCO groups are present, a compound forms which acts not as an internal emulsifier but as a separate emulsifier during the preparation of the polyurethane dispersion. The water resistance of coatings based on polyurethane dispersions of this type are adversely affected as a result.

The present invention is characterized in that the emulsifier system is a compound according to formula (I), formula (II) or formula (III),
formula (I) being represented by:

$$(R^1 - (O - CH_2 - \overset{R^2}{\overset{|}{C}}H)_a - O - \overset{O}{\overset{\|}{C}})_b - R^3 - (\overset{O}{\overset{\|}{C}} - O - R^4)_c \qquad (I)$$

in which:

- a = 5-50,
- b = 1 or 2,
- c = 2,
- $R^1$ = $(C_1-C_4)$alkyl,
- $R^2$ = H or $(C_1-C_4)$alkyl,
- $R^3$ = $(C_6-C_{12})$cycloalkyl or $(C_6-C_{12})$ aryl and
- $R^4$ =

$$CH_2-\underset{OH}{\underset{|}{C}}H-R^5$$

in which
$R^5$ = H or $(C_1-C_4)$alkyl, or
$R^4$ =

$$CH_2 - \underset{OH}{\underset{|}{C}}H - CH_2 - O - R^6$$

in which
$R^6$ = $(C_1-C_{32})$alkyl,
$(C_6-C_{32})$cycloalkyl or
$(C_6-C_{32})$ aryl;

formula (II) being represented by

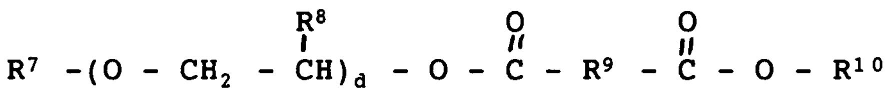 (II)

in which:

d = 5-50,

$R^7$ = $(C_1\text{-}C_4)$alkyl,

$R^8$ = H or $(C_1\text{-}C_4)$alkyl,

$R^9$ = $(C_2\text{-}C_{12})$alkyl, $(C_6\text{-}C_{12})$cycloalkyl or $(C_6\text{-}C_{12})$ aryl and

$R^{10}$ =

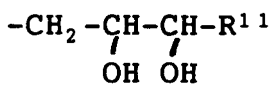

in which

$R^{11}$ = H or $(C_1\text{-}C_4)$alkyl;

and formula (III) being represented by

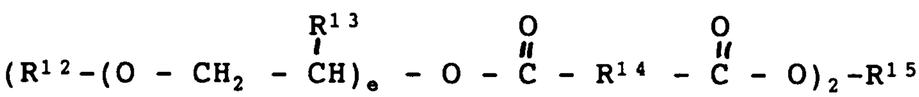 (III)

in which:

e = 5-50

$R^{12}$ = $(C_1\text{-}C_4)$alkyl

$R^{13}$ = H or $(C_1\text{-}C_4)$alkyl,

$R^{14}$ = $(C_2\text{-}C_{12})$alkyl or $(C_6\text{-}C_{12})$ cycloalkyl or $(C_6\text{-}C_{12})$ aryl and

$R^{15}$ =

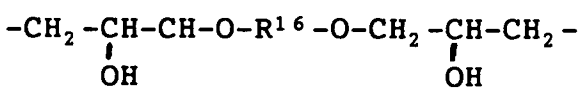

in which: $-O-R^{16}-O$ = aliphatic, cycloaliphatic or aromatic epoxyresin backbone containing 6-75 carbonatoms.

The present invention provides an emulsifier system which results in coatings based on polyurethane dispersions which have improved water resistance. This is because the emulsifier system according to the present invention results in a reduction of the number of undesired side reactions.

Other advantages of the emulsifier system according to the present invention are the improved film forming properties of the coating, the smaller particles of the obtained dispersion and the reduced foaming occuring during dispersion.

According to a preferred embodiment of the present invention, the emulsifier system used is a compound according to formula (I).

The preparation of the emulsifier system according to formula (I) can take place by carrying out, in a first step, a reaction between an alkoxypolyalkylene glycol and an acid anhydride at temperatures between 100 °C and 200 °C, preferably between 110 °C and 130 °C, for a period of preferably 1-3 hours. In a second step the product obtained in the first step is then reacted with alkylene oxide. The reaction temperature in this second step can be between 100 °C and 200 °C, preferably between 120 °C and 130 °C.

The two reactions can be carried out either with or without catalysts. Suitable catalysts include, for example, tertiary amines, dimethylbenzylamine, tetramethylammonium bromide and triethylamine. The catalysts can be used in amounts of between, for example, 0.025 and 0.5% by weight.

The reactions can take place either solvent-free or in the presence of solvents such as, for example, toluene, xylene or N-methyl pyrolidone. The reactions are preferably carried out in the absence of a solvent.

Suitable alkoxypolyalkylene glycols include for example methoxypolyethylene glycol, butoxypolyethylene glycol and alkoxy copolymers of ethylene glycol and propylene glycol. It is preferred to use methoxypolyethylene glycol (MPEG), preferably having a molecular weight of between 500 and 1000.

Suitable acid anhydrides include trimellitic anhydride and pyromellitic anhydride. Preferably trimellitic anhydride (TMA) is used as acid anhyddride.

Suitable alkylene oxides include, for example, ethylene oxide, propylene oxide, butylene oxide and glycidyl versatate (Cardura E™ from Shell). Preferably propylene oxide (PPO) is used as alkylene oxide.

The molar ratio alkoxypolyalkylene glycol to acid anhydride is usually between 1:0.9 and 1:1.1 and is preferably between 1:1.0 and 1:1.05. The molar ratio of the reaction product of alkoxypolyalkylene glycol and acid anhydride to alkylene oxide is usually between 1:1.9 and 1:2.2 and is preferably between 1:2.0 and 1:2.1.

According to a preferred embodiment of the invention, in formula (I):

a = 15-20,
b = 1,
c = 2,
$R^1$ = methyl,
$R^2$ = H,
$R^3$ = a $C_6$ aromatic radical and
$R^4$ =

$$-CH_2 - \underset{OH}{\underset{|}{CH}} - R^5,$$

in which
$R^5$ = $CH_3$

The preparation of the emulsifier system according to formula (II) can take place by carrying out, in a first step, a reaction between an alkoxypolyalkylene glycol and an alkoxypolyalkylene glycol and an anhydride at temperatures between 100°C and 200°C, preferably between 110°C and 130°C, for 1-3 hours. The reaction product obtained then reacts, in a second step, with an epoxy alcohol for 1-3 hours at temperatures between 100°C and 200°C, preferably at temperatures between 130°C and 140°C.

The alkoxypolyalkylene glycol used is preferably methoxypolyethylene glycol (MPEG) having a molecular weight of preferably between 500 and 1000. Other suitable alkoxypolyalkylene glycols are, for example, butoxypolyalkylene glycol and alkoxy copolymers of ethylene glycol and propylene glycol.

Suitable anhydrides include, for example, hexahydrophthalic anhydride, phthalic anhydride and succinic anhydride. Succinic anhydride is preferably used.

The epoxy alcohol used is preferably glycidol.

The molar ratio of alkoxypolyalkylene glycol to anhydride is usually between 1:0.9 and 1:1.1 and is preferably between 1:1.0 and 1:1.05. The molar ratio of the reaction product of alkoxypolyalkylene glycol and anhydride to epoxy alcohol is usually between 1:0.9 and 1:1.15 and is preferably between 1:1.0 and 1:1.1.

The two reactions can be carried out either with or without catalyst. Suitable catalysts include, for example, tertiary amines, dimethylbenzylamine, tetramethylammonium bromide and triethylamine. The catalysts can be used in amounts of between, for example, 0.025 and 0.5% by weight.

The reactions can be carried out either solvent-free or in the presence of solvents such as for example toluene, xylene or N-methyl pyrolidone. The reactions are preferably carried out in the absence of a solvent.

According to a preferred embodiment of the present invention, in formula (II):

d = 15-20,
$R^7$ = methyl,
$R^8$ = H,
$R^9$ = $C_2$-alkyl and
$R^{10}$ =

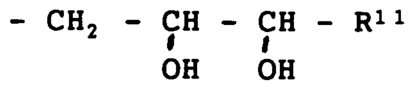

in which

$R^{11}$ = H

The preparation of the emulsifier system according to formula (III) can take place by carrying out, in a first step, a reaction between an alkoxypolyalkylene glycol and an anhydride at temperatures between 100 ° C and 200 ° C, preferably between 110 ° C and 130 ° C, for 1-3 hours. The intermediate obtained in the first step can then react, in a second step, with a diglycidyl ether, for 1-3 hours, at temperatures between 100 ° C and 200 ° C, preferably between 130 ° C and 140 ° C.

Suitable alkoxypolyalkylene glycols include, for example, methoxypolyethylene glycol, butoxypolyethylene glycol and alkoxy copolymers of ethylene glycol and propylene glycol. Preferably, MPEG having a molecular weight of between 500 and 1000 is chosen.

Suitable anhydrides include for example succinic anhydride, phthalic anhydride and hexahydrophthalic anhydride. Preferably succinic anhydride is chosen as anhydride.

Suitable diglycidyl ethers include, for example, bisphenol A diglycidyl ether, butanediol diglycidyl ether, neopentyl glycol diglycidyl ether and cyclohexane dimethanol diglycidyl ether. Preferably bisphenol A diglycidyl ether is used.

The molar ratio of alkoxypolyalkylene glycol to anhydride is usually between 1:0.9 and 1:1.1 and is preferably between 1:1.0 and 1:1.05. The molar ratio of (reaction product of alkoxypolyalkylene glycol and anhydride):diglycidyl ether is usually between 1:0.45 and 1:0.6 and is preferably between 1:0.50 and 1:0.55.

The reactions can be carried out either solvent-free or in the presence of solvents such as for example toluene, xylene and N-methylpyrolidone. The reactions are preferably carried out in the absence of a solvent.

The two reactions can be carried out either with or without catalysts. Suitable catalysts include, for example, tertiary amines, dimethylbenzylamine, tetramethylammonium bromide and triethylamine. The catalysts can be used in amounts of between, for example, 0.025 and 0.5% by weight.

According to a preferred embodiment of the invention, in formula (III):

e = 15-20

$R^{12}$ = methyl

$R^{13}$ = H,

$R^{14}$ = $C_2$-alkyl and

$R^{15}$ =

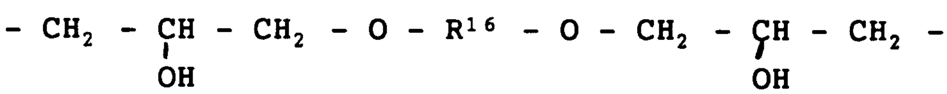

in which:

$R^{16}$ = $-(C_6H_4)-C_3H_6-(C_6H_4)-$

Nonionic polyurethane dispersions can be prepared by known methods such as those described, for example, on pages 121-138 of the already mentioned article "Advances in Urethane Science and Technology". The preparation of polyurethane dispersions can take place in a number of steps, such as first the preparation of a precursor, then a dispersion process and then chain lengthening. When preparing a precursor it is preferred to obtain short chains with terminal isocyanate (NCO) groups. By this means the prepolymer is subsequently able to react further. Terminal NCO groups can be obtained by allowing a polymer diol to react with a diisocyanate, for example in the ratio of diol to diisocyanate of 1:2.

Various polymers (molecular weight between about 500 and 4000) can be used as diol provided these polymers have terminal OH groups. Examples of such polymers include polypropylene glycol, straight-chain polyesters, polycaprolactones, polycarbonates or polytetrahydrofurans. In addition to these polymer diols, it is also possible to use shorter diols or triols. For example, butane-1,4-diol, hexane-1,6-diol and trimethylolpropane can be used for this purpose.

The diisocyanate used can be, for example, isophorone diisocyanate, toluene diisocyanate, hexane 1,6-diisocyanate or methane diphenyl diisocyanate. The precursor having terminal NCO groups which is obtained can subsequently be dispersed in water. Chain lengthening can be effected using water or using a primary or secondary amine such as, for example, ethylene diamine.

The emulsifier system according to the present invention can be used for example during the

preparation of the precursor in amounts of for example between 5 and 50% by weight, and more particularly between 20 and 35% by weight of total weight of said precursor and emulsifier system.

The emulsifier system according to the present invention can be used in the preparation of, for example, nonionic polyurethane dispersions, UV-curable polyurethane dispersions, hybrid systems such as polyurethane/acrylate hybrid systems and non-ionic/anionic combined polyurethane dispersions. These dispersions and systems can also be applied in adhesives and paints.

The present invention also relates to non-ionic aqueous polyurethane dispersions based on tetramethylxylene diisocyanate (TMXDI), to a process for preparing these dispersions and to coatings based on these polyurethane dispersions.

As appears from the paper entitled 'New and Improved Waterborne Polyurethanes from the TMXDI Aliphatic Isocyanate Family' by Cody and Askew from the proceedings of the 'Waterborne and Higher Solids Coatings Symposium' (New Orleans, USA, February 21-23, 1990) and from EP-A-242731 aqueous polyurethane dispersions based on TMXDI are known in the art. The known dispersions, however, concern anionic and cationic polyurethane dispersions. Non-ionic polyurethane dispersions based on TMXDI are not disclosed. An advantage of non-ionic dispersions over ionic dispersions is that no solvents (co-solvents) or neutralizers are required.

By applying the emulsifier systems of the present invention aqueous non-ionic polyurethane dispersions based on TMDXI can be obtained.

The preparation of the polyurethane dispersions of the present invention preferably takes place in a number of steps, such as first the preparation of a TMXDI-terminated initial product in the presence of an emulsifier system, then a dispersing process in water and after that chain lengthening using amines. The emulsifier system used is an emulsifier system according to formula (I), formula (II) or formula (III).

Preferably a system according to formula (I) is used.

A major advantage of this preparation process over the preparation of anionic dispersions is the lower viscosity of the initial product, which facilitates dispersion. Moreover, the isocyanate groups of the TMXDI do not react with water, so that no foaming occurs during the dispersion so that a better polyurethane structure is obtained. Further, a number of film properties of the resulting polyurethane dispersion such as, for instance, flexibility and adhesion to plastics, are better.

The preparation of the isocyanate-terminated initial product takes place by reacting diol, TMXDI and the emulsifier system with each other. The temperature is mostly between 90°C and 95°C. Optionally a catalyst like dibutyltin laurate can be used.

In the preparation of the initial product, preference is given to obtaining short chains with terminal isocyanate (NCO) groups in order to subsequently allow the prepolymer to react further. Terminal NCO groups can be obtained by reacting a polymeric diol with the diisocyanate. The OH : NCO equivalent proportion is usually between 1 : 1.6 and 1 : 2.2 and is preferably between 1 : 1.9 and 1 : 2.0.

During the preparation of the initial product the present emulsifier system can be used in amounts of, for example, between 5 and 50% (wt), more specifically between 20 and 35% (wt). Mixtures based on TMXDI and one or more other diisocyanates scuh as for instance isophorone diisocyanate (IPDI), toluene diisocyanate, 1,6-hexane diisocyanate, methanedicyclohexyl diisocyanate and/or methanediphenyl diisocyanate can also be used. The mixtures contain preferably more than 50% (wt) TMXDI.

The resulting initial product with terminal NCO groups is subsequently dispersed in water.

The chain lengthening is effected with an amine. Preference is given to the use of primary or secondary amines such as, for instance, ethylenediamine, isophoronediamine and/or 2-methyl-pentaneamine. Triamines such as, for instance, diethylenetriamine can optionally also be used. The NCO : NH or $NH_2$ equivalent proportion is usually between 1 : 1.0 and 1 : 1.2 and is preferably virtually 1 : 1.02.

The present invention is illustrated with the aid of the following non-restrictive examples.

## Examples

### Example I

#### Preparation of emulsifier system according to formula (I)

685 parts by weight of methoxypolyethylene glycol (MPEG) and 184 parts by weight of trimellitic anhydride (TMA) were heated to 120°C under nitrogen in a vessel provided with a stirrer. After 3 hours at 120°C (at an acid number of 130), the reaction mixture was heated to 125°C and 129 parts by weight of propylene oxide were passed into the vessel over a period of 3 hours. An acid number of < 5 was reached 2 hours after metering in, at 125°C.

The reaction product had the following constants:

| | |
|---|---|
| Hydroxyl number<br>Acid number<br>Ethylene glycol content per mol | 110 mg KOH/gram<br>< 5 mg KOH/gram<br>66% |

Example II

Preparation of emulsifier system according to formula (II)

749 parts by weight of methoxypolyethylene glycol (MPEG) and 163 parts by weight of phthalic anhydride (PA) were heated to 120 °C under nitrogen in a vessel provided with a stirrer. After 3 hours at 120 °C (at an acid number of 75), 88 parts by weight of glycidol were added. An acid number of < 5 was reached after 2 hours at 135 °C.

The reaction product had the following constants:

| | |
|---|---|
| Hydroxyl number<br>Acid number<br>Ethylene glycol content per mol | 135 mg KOH/gram<br>< 5 mg KOH/gram<br>72% |

Example III

Preparation of emulsifier system according to formula (III)

662 parts by weight of methoxypolyethylene glycol (MPEG) and 146 parts by weight of phthalic anhydride (PA) were heated to 120 °C under nitrogen in a vessel provided with a stirrer. After 3 hours at 120 °C (at an acid number of 75), 191 parts by weight of bisphenol diglycidyl ether (Epikote 828) were added. An acid number of < 5 was reached after 2 hours at 135 °C.

The reaction product had the following constants:

| | |
|---|---|
| Hydroxyl number<br>Acid number<br>Ethylene glycol content per mol | 61 mg KOH/gram<br>< 5 mg KOH/gram<br>68% |

Comparative Experiment A

Emulsifier system based on MPEG and IPDI

678 parts by weight of methoxypolyethylene glycol (MPEG) and 209 parts by weight of isophorone diisocyanate (IPDI) were heated to 90 °C under nitrogen in a vessel provided with a stirrer. After 3 hours at 90 °C (at an NCO content of 4.5%) the reaction mixture was cooled to 35 °C and 113 parts by weight of aminoethylpropanediol (AEPD) were then added. The reaction mixture was then stirred until the NCO content was 0%.

The reaction product obtained had the following constants:

| | |
|---|---|
| Hydroxyl number<br>Acid number<br>Ethylene glycol content per mol | 105 mg KOH/gram<br>0<br>65% |

Example IV

Preparation of polyurethane dispersion

133 parts by weight of emulsifier system according to Example I, 79 parts by weight of polypropylene glycol, 40 parts by weight of ethylene glycol diether of bisphenol-A (Dianol 22™) and 146 parts by weight of isophorone diisocyanate (IPDI) were mixed and the mixture was heated to 90° C. After 3 hours at 90° C, the mixture, which had an NCO content of 6.8%, was pumped in the course of 1.5 hours into a dispersing vessel, in which 600 parts by weight of demineralised water had been initially introduced. The vessel was then heated to 45°-50° C, and chain- lengthening took place. When the NCO content was 0%, the dispersion was cooled to < 35° C and drained off.

Example V

Preparation of a UV-curable polyurethane dispersion

172 parts by weight of emulsifier system according to Example I, 24 parts by weight of hexane-1,6-diol and 167 parts by weight of isophorone diisocyanate were mixed and the mixture was heated to 90° C. After 3 hours at 90° C, 86 parts by weight of hydroxyethyl acrylate were added dropwise to the mixture, which had an NCO content of 8.6%. After a reaction time of 5 hours at 90° C, the NCO content was < 0.1%. The product was then pumped in the course of 1.5 hours into a dispersing vessel, in which 550 parts by weight of demineralised water had been initially introduced.

Comparative Experiment B

350 parts by weight of emulsifier system according to Comparative Experiment A, 237 parts by weight of polypropylene glycol, 71 parts by weight of ethylene glycol diether of bisphenol A (Dianol 22™) and 342 parts by weight of isophorone diisocyanate were mixed and heated to 90° C. After 3 hours at 90° C, the mixture, which had an NCO content of 6.4%, was pumped in the course of 1.5 hours into a dispersing vessel, in which 1222 parts by weight of demineralised water had been initially introduced. The vessel was then heated to 40°-45° C, whereupon chain lengthening took place. Depending on the amount of foam, anti-foaming agent was added. When the NCO content was 0%, the dispersion was cooled to 30° C and drained off.

The differences between the emulsifier systems according to the examples and the comparative experiments and the dispersions according to the examples and comparative experiments could be summarized as follows (see Table I).

Table I

| | Example I | Expt. A |
|---|---|---|
| Purity of the emulsifier system 1) | 95% | 75% |
| | **Example IV** | **Expt. B** |
| Preparation of the dispersion) | little foam | considerable foam |
| Particle size) | 50 nm. | 100 nm. |
| Film properties of the dispersion according to: | **Example IV** | **Expt. B** |
| Water resistance 2) | good | moderate |
| Film forming 3) | excellent | moderate |

1) determined using GPC (gel permeation chromatography calibrated on polystyrene standard)
2) determined by DIN 50017
3) visually determined

The emusifier system according to the present invention resulted in a lowering of the number of undesired side reactions and consequently resulted in an increased purity. A better dispersibility was obtained because of a reduction in foaming and a reduction in the particle size. The dispersions displayed improved properties with respect to water resistance and film forming qualities of the coating.

Example VI

Preparation of a non-ionic dispersion on the basis of TMXDI

321 parts by weight emulsifier system according to Example I, 190 parts by weight polypropylene glycol 1000, 96 parts by weight ethylene glycol diether of bisphenol-A (Dianol 22™) and 387 parts by weight of TMXDI were mixed and heated to 90 °C. The mixture was maintained at 90 °C, in the presence of 0.2 part by weight dibutyltin dilaurate. Subsequently the mixture, having an NCO content of 6.5%, was pumped over, in the course of 1.5 hours, to a dispersing vessel to which 1400 parts by weight of demineralized water had been supplied. Subsequently, at 25 °C, 47 parts by weight of ethylenediamine dissolved in 161 parts by weight of demineralized water was added to the mixture.

Example VII

Preparation of a non-ionic dispersion on the basis of TMXDI and IPDI

321 parts by weight emulsifier system according to Example I, 190 parts by weight polypropylene glycol 1000, 96 parts by weight ethylene glycol diether of bisphenol-A (Dianol 22™), 290 parts by weight of TMXDI and 88 parts by weight isophorone diisocyanate (IPDI) were mixed and heated to 90 °C. After 3

hours at 90 °C, in the presence of 0.2 part by weight of dibutyltin dilaurate. The mixture, having an NCO content of 6.5%, was pumped over, in the course of 1.5 hours, to a dispersing vessel to which 1400 parts by weight demineralized water had been supplied. Subsequently, at 25 °C, 44 parts by weight ethylenediamine dissolved in 152 parts by weight demineralized water was added in 15 minutes to the mixture.

Example VIII

Preparation of a dispersion based on IPDI

321 parts by weight emulsifier system according to Experiment I, 190 parts by weight polypropylene glycol 1000, 96 parts by weight ethylene glycol diether of bisphenol-A (Dianol 22) and 352 parts by weight of IPDI were mixed and heated to 90 °C. After 3 hours at 90 °C, in the presence of 0.2 parts by weight dibutyltin dilaurate, the mixture, having an NCO content of 6.5%, was pumped over, in the course of 1.5 hours, to a dispersing vessel to which 1400 parts by weight demineralized water had been supplied. Subsequently, at 25 °C, 41 parts by weight of ethylenediamine dissolved in 109 parts by weight of demineralized water was added to the mixture.

Example IX

The viscosity, the flexibility and the adhesion to ABS of the dispersions obtained according to Examples VI-VIII were tested.

The preparation of the film for the elongation tests was carried out as follows:

a. 15 g of dispersion was diluted with water to 20% solid;
b. this dilution was subsequently poured out over a glass sheet;
c. after that, the film was dried in an oven at 60 °C for 24 hours;
d. after drying for 24 hours, the film of approximately 0.2 mm was carefully removed from the glass sheet;
e. subsequently, the elasticity was determined according to DIN 53455.

The adhesion test to ABS was performed as follows:

a. onto an ABS sheet a dispersion was applied having a thickness of 100 µm (wet);
b. the film was dried for 30 minutes at 60 °C;
c. after drying, the ABS sheet with film was stored at room temperature for 24 hours and
d. then the adhesion was determined using the 'Gitterschnitt' method (DIN 53151).

The results of the test methods were:

| Examples | VI | VII | VIII |
|---|---|---|---|
| Viscosity of initial product (Emila, 70°C, Poise) | 12 | 16 | 27 |
| % elongation flexibility | 355% | 330% | 245% |
| Adhesion to ABS | GT0*) | GT0*) | GT5*) |

*) where GT0 = no loss of adhesion
GT5 = total loss of adhesion

These results show that the TMXDI-based non-ionic aqueous polyurethane dispersions resulted in a lower

viscosity of the initial product, a higher flexibility of the coating and a better adhesion to ABS.

**Claims**

1. Internal emulsifier system based on alkylene oxide units, characterised in that the emulsifier system is an emulsifier system according to formula (I), formula (II) or formula (III), formula (I) being represented by:

$$(R^1 - (O - CH_2 - \underset{}{\overset{R^2}{\overset{|}{C}}}H)_a - O - \overset{O}{\overset{\|}{C}})_b - R^3 - (\overset{O}{\overset{\|}{C}} - O - R^4)_c \quad (I)$$

wherein:

a = 5-50,
b = 1 or 2,
c = 2,
$R^1$ = $(C_1\text{-}C_4)$alkyl,
$R^2$ = H or $(C_1\text{-}C_4)$alkyl,
$R^3$ = $(C_6\text{-}C_{12})$cycloalkyl or $(C_6\text{-}C_{12})$ aryl and
$R^4$ =

$$CH_2-\underset{OH}{\underset{|}{C}}H-R^5$$

in which
$R^5$ = H or $(C_1\text{-}C_4)$alkyl, or
$R^4$ =

$$CH_2 - \underset{OH}{\underset{|}{C}}H - CH_2 - O - R^6$$

in which
$R^6$ = $(C_1\text{-}C_{32})$alkyl, $(C_6\text{-}C_{32})$cycloalkyl or $(C_6\text{-}C_{32})$aryl;

formula (II) being represented by

$$R^7 -(O - CH_2 - \overset{R^8}{\overset{|}{C}}H)_d - O - \overset{O}{\overset{\|}{C}} - R^9 - \overset{O}{\overset{\|}{C}} - O - R^{10} \quad (II)$$

wherein:

d = 5-50,
$R^7$ = $(C_1\text{-}C_4)$alkyl,
$R^8$ = H or $(C_1\text{-}C_4$alkyl,
$R^9$ = $(C_2\text{-}C_{12})$alkyl, $(C_6\text{-}C_{12})$cycloalkyl or $(C_6\text{-}C_{12})$ aryl and
$R^{10}$ =

$$-CH_2-\underset{OH}{\underset{|}{C}}H-\underset{OH}{\underset{|}{C}}H-R^{11}$$

in which

$R^{11}$ = H or $(C_1-C_4)$alkyl;

and formula (III) being represented by

$$(R^{12}-(O-CH_2-\overset{R^{13}}{\overset{|}{CH}})_e-O-\overset{O}{\overset{||}{C}}-R^{14}-\overset{O}{\overset{||}{C}}-O)_2-R^{15} \quad \text{(III)}$$

in which:

e = 100-500

$R^{12}$ = $(C_1-C_4)$alkyl

$R^{13}$ = H or $(C_1-C_4)$alkyl,

$R^{14}$ = $(C_2-C_{12})$alkyl or $(C_6-C_{12})$ cycloalkyl or $(C_6-C_{12})$ aryl and

$R^{15}$ =

$$-CH_2-\underset{OH}{\underset{|}{CH}}-CH-O-R^{16}-O-CH_2-\underset{OH}{\underset{|}{CH}}-C_2-$$

in which $-O-R^{16}-O$ = aliphatic, cycloaliphatic or aromatic epoxyresins backbone containing 6-75 carbonatoms.

**2.** Emulsifier system according to Claim 1, characterised in that, in formula (I):

a = 15-20,

b = 1

c = 2

$R^1$ = methyl,

$R^2$ = H,

$R^3$ = a $C_6$ aromatic radical and

$R^4$ =

$$-CH_2-\underset{OH}{\underset{|}{CH}}-R^5,$$

in which

$R^5$ = $CH_3$

**3.** Emulsifier system according to Claim 1, characterised in that, in formula (II):

d = 15-20,

$R^7$ = methyl,

$R^8$ = H,

$R^9$ = $C_2$-alkyl and

$R^{10}$ =

$$-CH_2-\underset{OH}{\underset{|}{CH}}-\underset{OH}{\underset{|}{CH}}-R^{11}$$

in which

$R^{11}$ = H

**4.** Emulsifier system according to Claim 1, characterised in that in formula (III):

e = 15-20

$R^{12}$ = methyl

$R^{13}$ = H,
$R^{14}$ = $C_2$-alkyl and
$R^{15}$ =

$$-CH_2-\underset{OH}{CH}-CH_2-O-R^{16}-O-CH_2-\underset{OH}{CH}-CH_2-$$

in which
$R^{16}$ = $-(C_6H_4)-C_3H_6-(C_6H_4)-$

**5.** Method for the preparation of an emulsifier system according to formula (I), characterised in that, in a first step, a reaction is carried out between an alkoxypolyalkylene glycol and an acid anhydride at a temperature between 100 °C and 200 °C for a period of 1-3 hours, after which, in a second step, the product obtained in the first step reacts with alkylene oxide at a reaction temperature between 100 °C and 200 °C, the molar ratio of alkoxypolyalkylene glycol to acid anhydride being between 1:0.9 and 1:1.1 and the molar ratio of reaction product of alkoxypolyalkylene glycol and acid anhydride to alkylene oxide being between 1:1.9 and 1:2.2.

**6.** Method for the preparation of an emulsifier system according to formula (II), characterised in that, in a first step, a reaction is carried out between an alkoxypolyalkylene glycol and an anhydride at a temperature between 100 °C and 200 °C for a period of 1-3 hours, after which the reaction product obtained then reacts, in a second step, with an epoxy alcohol at a temperature between 100 °C and 200 °C, the molar ratio of alkoxypolyalkylene glycol to anhydride being between 1:0.9 and 1:1.1 and the molar ratio of reaction product of alkoxypolyalkylene glycol and anhydride to epoxy alcohol being between 1:0.9 and 1:1.15.

**7.** Method for the preparation of an emulsifier system according to formula (III), characterised in that, in a first step, a reaction is carried out between an alkoxypolyalkylene glycol and an anhydride at a temperature between 100 °C and 200 °C for a period of 1-3 hours, after which the intermediate obtained in the first step then reacts in a second step with a diglycidyl ether for a period of 1-3 hours at a temperature between 100 °C and 200 °C, the molar ratio alkoxypolyalkylene glycol to anhydride being between 1:0.9 and 1:1.1 and the molar ratio of reaction product of alkoxypolyalkylene glycol and anhydride to diglycidyl ether being between 1:0.45 and 1:0.6.

**8.** Polyurethane dispersion based on an emulsifier system according to any one of Claims 1-4 or a polyurethane dispersion based on an emulsifier system obtained according to any one of Claims 5-7.

**9.** Method for the preparation of polyurethane dispersions, characterised in that the emulsifier used is the emulsifier system according to any one of Claims 1-4 or the emulsifier system obtained according to any one of Claims 5-7, in amounts of between 5% by weight and 50% by weight.

**10.** Aqueous non-ionic polyurethane dispersion based on tetramethylxylene diisocyanate and an emulsifier system, characterized in that the emulsifier system is an emulsifier system according to formula (I), formula (II) or formula (III).

**11.** Method for the preparation of an aqueous non-ionic polyurethane dispersion based on tetramethylxylenediisocyanate by first preparing a TMXDI-terminated initial product in the presence of an emulsifier system, than a dispersing process in water and after that chain lengthening using amines, characterised in that the emulsifier system is an emulsifier system according to formula (I), formula (II) or formula (III).

**12.** Use of a polyurethane dispersion according to any one of claims 8 or 10, or use of a polyurethane dispersion obtained according to any one of claims 9 or 11.

**13.** Coating based on a dispersion according to any one of claims 8 or 10 or based on a dispersion obtained according to any one of claims 9 or 11.

**Claims for the following Contracting State : ES**

1. Method for the preparation of polyurethane dispersions with an internal emulsifier system based on alkylene oxide units, characterised in that the emulsifier system is an emulsifier system according to formula (I), formula (II) or formula (III), formula (I) being represented by:

$$(R^1 - (O - CH_2 - \overset{\overset{\displaystyle R^2}{|}}{C}H)_a - O - \overset{\overset{\displaystyle O}{\|}}{C})_b - R^3 - (\overset{\overset{\displaystyle O}{\|}}{C} - O - R^4)_c \quad (I)$$

wherein:

a = 5-50,
b = 1 or 2,
c = 2,
$R^1$ = $(C_1\text{-}C_4)$alkyl,
$R^2$ = H or $(C_1\text{-}C_4)$alkyl,
$R^3$ = $(C_6\text{-}C_{12})$cycloalkyl or $(C_6\text{-}C_{12})$ aryl and
$R^4$ =

$$CH_2\text{-}\underset{\displaystyle OH}{CH}\text{-}R^5$$

in which
$R^5$ = H or $(C_1\text{-}C_4)$alkyl, or
$R^4$ =

$$CH_2 - \underset{\underset{\displaystyle OH}{|}}{CH} - CH_2 - O - R^6$$

in which
$R^6$ = $(C_1\text{-}C_{32})$alkyl,
$(C_6\text{-}C_{32})$cycloalkyl or
$(C_6\text{-}C_{32})$aryl;

formula (II) being represented by

$$R^7 -(O - CH_2 - \overset{\overset{\displaystyle R^8}{|}}{C}H)_d - O - \overset{\overset{\displaystyle O}{\|}}{C} - R^9 - \overset{\overset{\displaystyle O}{\|}}{C} - O - R^{10} \quad (II)$$

wherein:

d = 5-50,
$R^7$ = $(C_1\text{-}C_4)$alkyl,
$R^8$ = H or $(C_1\text{-}C_4)$alkyl,
$R^9$ = $(C_2\text{-}C_{12})$alkyl, $(C_6\text{-}C_{12})$cycloalkyl or $(C_6\text{-}C_{12})$ aryl and
$R^{10}$ =

$$-CH_2\text{-}\underset{\underset{\displaystyle OH}{|}}{CH}\text{-}\underset{\underset{\displaystyle OH}{|}}{CH}\text{-}R^{11}$$

in which
$R^{11}$ = H or $(C_1\text{-}C_4)$alkyl;

and formula (III) being represented by

$$(R^{12}-(O-CH_2-\overset{R^{13}}{\overset{|}{C}}H)_e-O-\overset{O}{\overset{\|}{C}}-R^{14}-\overset{O}{\overset{\|}{C}}-O)_2-R^{15} \quad (III)$$

in which:

$e$ = 100-500
$R^{12}$ = $(C_1-C_4)$alkyl
$R^{13}$ = H or $(C_1-C_4)$alkyl,
$R^{14}$ = $(C_2-C_{12})$alkyl or
$(C_6-C_{12})$ cycloalkyl or
$(C_6-C_{12})$ aryl and
$R^{15}$ =

$$-CH_2-\underset{OH}{\underset{|}{CH}}-CH-O-R^{16}-O-CH_2-\underset{OH}{\underset{|}{CH}}-C_2-$$

in which $-O-R^{16}-O$ = aliphatic, cycloaliphatic or aromatic epoxyresins backbone containing 6-75 carbonatoms

and that the emulsifier system is used in amounts between 5 and 50% by weight.

**2.** Method according to Claim 1, characterised in that, in formula (I):

$a$ = 15-20,
$b$ = 1
$c$ = 2
$R^1$ = methyl,
$R^2$ = H,
$R^3$ = a $C_6$ aromatic radical and
$R^4$ =

$$-CH_2-\underset{OH}{\underset{|}{CH}}-R^5,$$

in which
$R^5$ = $CH_3$

**3.** Method according to Claim 1, characterised in that, in formula (II):

$d$ = 15-20,
$R^7$ = methyl,
$R^8$ = H,
$R^9$ = $C_2$-alkyl and
$R^{10}$ =

$$-CH_2-\underset{OH}{\underset{|}{CH}}-\underset{OH}{\underset{|}{CH}}-R^{11}$$

in which
$R^{11}$ = H

**4.** Method according to Claim 1, characterised in that in formula (III):

$e$ = 15-20

$R^{12}$ = methyl
$R^{13}$ = H,
$R^{14}$ = $C_2$-alkyl and
$R^{15}$ =

$$-CH_2-CH(OH)-CH_2-O-R^{16}-O-CH_2-CH(OH)-CH_2-$$

in which
$R^{16}$ = $-(C_6H_4)-C_3H_6-(C_6H_4)-$

**5.** Method for the preparation of an emulsifier system according to formula (I), characterised in that, in a first step, a reaction is carried out between an alkoxypolyalkylene glycol and an acid anhydride at a temperature between 100°C and 200°C for a period of 1-3 hours, after which, in a second step, the product obtained in the first step reacts with alkylene oxide at a reaction temperature between 100°C and 200°C, the molar ratio of alkoxypolyalkylene glycol to acid anhydride being between 1:0.9 and 1:1.1 and the molar ratio of reaction product of alkoxypolyalkylene glycol and acid anhydride to alkylene oxide being between 1:1.9 and 1:2.2.

**6.** Method for the preparation of an emulsifier system according to formula (II), characterised in that, in a first step, a reaction is carried out between an alkoxypolyalkylene glycol and an anhydride at a temperature between 100°C and 200°C for a period of 1-3 hours, after which the reaction product obtained then reacts, in a second step, with an epoxy alcohol at a temperature between 100°C and 200°C, the molar ratio of alkoxypolyalkylene glycol to anhydride being between 1:0.9 and 1:1.1 and the molar ratio of reaction product of alkoxypolyalkylene glycol and anhydride to epoxy alcohol being between 1:0.9 and 1:1.15.

**7.** Method for the preparation of an emulsifier system according to formula (III), characterised in that, in a first step, a reaction is carried out between an alkoxypolyalkylene glycol and an anhydride at a temperature between 100°C and 200°C for a period of 1-3 hours, after which the intermediate obtained in the first step then reacts in a second step with a diglycidyl ether for a period of 1-3 hours at a temperature between 100°C and 200°C, the molar ratio alkoxypolyalkylene glycol to anhydride being between 1:0.9 and 1:1.1 and the molar ratio of reaction product of alkoxypolyalkylene glycol and anhydride to diglycidyl ether being between 1:0.45 and 1:0.6.

**8.** Method for the preparation of an aqueous non-ionic polyurethane dispersion based on tetramethylxylenediisocyanate by first preparing a TMXDI-terminated initial product in the presence of an emulsifier system, than a dispersing process in water and after that chain lengthening using amines, characterised in that the emulsifier system is an emulsifier system according to formula (I), formula (II) or formula (III).

European Patent Office

# EUROPEAN SEARCH REPORT

Application Number

EP 92 20 0157

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN<br>vol. 13, no. 171 (C-588)(3519) 24 April 1989<br>& JP-A-64 000 114 ( DAINIPPON INK ) 5 January 1989<br>* abstract *<br>--- | 1,5,8,9,12 | C08G18/42<br>C08G65/32<br>C08G18/76<br>B01F17/42<br>C08G18/10<br>C08G18/08<br>C08G18/48<br>C08G18/28<br>C08G18/12 |
| A | EP-A-0 242 731 (BAYER)<br>* claims 1,3 *<br>* page 4, line 33 - line 40 *<br>* page 4, line 51 - line 56 *<br>--- | 1 | |
| A | EP-A-0 369 389 (REICHOLD CHEMICALS)<br>* claims 1,2,4,5,8 *<br>* page 3, line 19 - line 26 *<br>----- | 1 | |
| | | | **TECHNICAL FIELDS SEARCHED (Int. Cl.5 )** |
| | | | C08G<br>C08J |

The present search report has been drawn up for all claims

| Place of search | Date of completion of the search | Examiner |
|---|---|---|
| THE HAGUE | 15 MAY 1992 | VAN PUYMBROECK M. A. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)